Europäisches Patentamt

European Patent Office

Office européen des brevets

(11) Veröffentlichungsnummer: **0 431 552 A2**

(12) # EUROPÄISCHE PATENTANMELDUNG

(21) Anmeldenummer: **90123206.6**

(51) Int. Cl.5: **H04M 1/274**

(22) Anmeldetag: **04.12.90**

(30) Priorität: **04.12.89 SU 4766531**

(43) Veröffentlichungstag der Anmeldung:
**12.06.91 Patentblatt 91/24**

(84) Benannte Vertragsstaaten:
**DE ES FR GB IT NL SE**

(71) Anmelder: **Paschenko, Nikolai Anatolievich
Ulitsa Udaltsova, 89, kv. 249
Moskau(SU)**

(72) Erfinder: **Paschenko, Nikolai Anatolievich
Ulitsa Udaltsova, 89, kv. 249
Moskau(SU)**

(74) Vertreter: **Patentanwälte Beetz sen. - Beetz
jun. Timpe - Siegfried - Schmitt-Fumian-
Mayr
Steinsdorfstrasse 10
W-8000 München 22(DE)**

(54) **Einrichtung zum automatischen Teilnehmerruf.**

(57) Die Erfindung bezieht sich auf die Nachrichtentechnik und betrifft insbesondere Teilnehmerapparate mit Tastennummernschaltern und gestattet es,
neben der Möglichkeit einer automatischen wiederholten mehrfachen Nummernwahl mit anschließendem Teilnehmerruf beim Verbindungsaufbau im Falle einer Leitungsbelegung einen automatischen Betrieb des Teilnehmerapparates in den Fällen zu sichern, wo die Signale des Wählamtes mit einer
Verzögerung nach Beendigung der Nummernwahl
eintreffen (was für die Arbeit mit quasielektronischen
und elektronischen Wählämtern kennzeichnend ist).
Darüber hinaus sorgt die Einrichtung , um eine
unkontrollierbare Belegung von Verbindungsleitungen und deren Überlastung zu verhindern, für den
Betrieb einer normierten Begrenzung der Anzahl der
wiederholten automatischen Nummernwahlen. Die
Einrichtung baut auf dem Prinzip der Einführung der
Betriebsart mit einem gleitenden Anfang der Periode
der Freigabe der Zählung der Anzahl der automatischen wiederholten Nummernwahlen auf.

EP 0 431 552 A2

## EINRICHTUNG ZUM AUTOMATISCHEN TEILNEHMERRUF

Die Erfindung bezieht sich auf die Nachrichtentechnik, betrifft eine Einrichtung zum automatischen Teilnehmerruf und kann in Teilnehmerapparaten (TA) mit einem Impuls- und Frequenzverfahren der Übertragung einer gewählten Nummer verwendet werden.

Es ist eine Reihe von technischen Lösungen und Erfindungen betreffend elektronischer Tastennummernschalter für Teilnehmerapparate bekannt, die mit Blöcken zum automatischen Teilnehmerruf versehen sind, deren Schaffung es gestattete, die Funktionsfähigkeiten der Teilnehmerapparate wesentlich zu erweitern, insbesondere die zuletzt gewählte Nummer zu speichern und sie im weiteren nach einem aufeinanderfolgenden Drücken einer speziellen Schluß- und Wiederholtaste durch den Teilnehmer von Hand unter Einhaltung einer Pause automatisch zu wählen, falls der gewünschte Teilnehmer beispielsweise besetzt ist (s. SU, A, 1246405, US,A, 3860765, DE, A, 2633419).

Im Besitz der genannten Funktionsfähigkeiten sind auch die in der UdSSR serienmäßig gefertigten Teilnehmerapparate "Electronika TA-5121-01 IN", "Spektr-6", VEF TA-12 u.a., die auf der Basis spezialisierter Mikroschaltkreise für Nummernschalter aufgebaut sind.

Allen oben aufgezählten Einrichtungen haftet ein gemeinsamer Mangel an, der im Fehlen der Betriebsart einer automatischen (ohne Eingriff des Benutzers des Teilnehmerapparates) mehrfachen Wiederholung der Wahl der Nummer des gewünschten Teilnehmers, falls dieser besetzt ist, besteht.

Zugleich damit stehen eine Reihe von Erfindungen zur Verfügung, die für eine automatische mehrfache Wahl des gewünschten Teilnehmers sorgen, nur aber sie alle recht kompliziert und für den Einsatz der bereits bestehenden Tastaturnummernschalter nicht ausgelegt sind. Darüber hinaus sind sie gegen Störgeräusche nicht geschützt, als deren Quellen der Sprechblock des Teilnehmerapparates, der eigentliche Nummernschalter und auch die Leitung selbst (SU,A, 640448, 726673, 750753) auftreten können, was die Entwicklung recht zuverlässiger serienmäßig gefertigter Erzeugnisse auf der Basis der obengenannten erschwert.

Von allen oben aufgezählten Einrichtungen liegen der erfindungsgemäßen nach dem technischen Wesen Einrichtungen am nächsten, die aus speziellen Mikroschaltkreisen für Numernschalter aufgebaut sind, nur aber sie, wie bereits erwähnt, keine Möglichkeit besitzen, die Nummer des gewünschten Teilnehmers voll automatisch mehrfach zu wählen, bis die Verbindung aufgebaut worden ist, denn sie fordern vom Benutzer, die Leitung nach der Nummernwahl abzuhören und im Falle des Vorliegens von Besetztzeichen vom Wählamt die Schluß- und die Wiederholtaste von Hand zu drücken, um die belegte Nummer erneut zu wählen.

Um mit einer genügend hohen Störfestigkeit eine mehrfache wiederholte automatische Wahl bei einer belegten Verbindungsleitung mit anschließendem Teilnehmerruf durch ein spezielles Schallsignal beim Verbindungsaufbau zu sichern, erfolgt eine erzwungene Unterbrechung des Zyklus der automatischen wiederholten Nummernwahlen sowohl manuell - entweder durch recht lange andauerndes Drücken der Schlußtaste des Tastennummernschalters seitens des Teilnehmers oder durch Auflegen des Handapparates auf den Gabelumschalter des Teilnehmerapparates - als auch automatisch.

Am nächsten liegt der erfindunggemäßen eine Einrichtung zum automatischen Teilnehmerruf, die im Teilnehmerapparat "Spektr-6" zum Einsatz gelangt.

Der zum genannten Teilnehmerapparat gehörende Tastennummernschalter führt insbesondere folgende Funktionen aus:

Nummernwahl mit einer Zeichenzahl von nicht über 22;

Mehrfache Wiederholung der zuletzt gewählten Nummer;

Unterbrechung der Nummernwahl in deren beliebiger Phase und anschließende Wiederholung der gesamten Nummer, beginnend mit der ersten Ziffer;

Abhören von Signalen des Wähamtes in Pausen zwischen beliebigen zwei Ziffern der zu wählenden Nummer;

Auslösen des Wählamtes beim Drücken der Schlußtaste.

Die bekannte Einrichtung zum automatischen Teilnehmerruf enthält einen mit einem Sprechblock verbundenen Tastennummernschalter mit einem Arbeitsspeicher sowie einen Wecker.

Der Tastennummernschalter ist mit einer Schlußund einer Wiederholtaste sowie mit Steuersignalquellen für einen Sprech- und einen Impulsschalter versehen.

Beim Abheben des Handapparates wird nach dem Amtszeichen die Nummer des gewünschten Teilnehmers durch Drücken von Zifferntasten (der Tastatur) des Tastennummernschalters gewählt, wobei jede nachfolgende Taste mit einer beliebigen Geschwindigkeit durchzudrücken ist, ohne eine Abarbeitung der vorhergehenden Ziffer der Nummer abwarten zu müssen. Die Ziffernzahl in der Nummer darf nicht 22 überschreiten.

Ist der gewünschte Teilnehmer besetzt und im Handapparat ein Besetztzeichen zu hören, wird die Schlußtaste des Tastennummernschalters von Hand gedrückt und losgelassen. Nachdem ein Amtzeichen zu hören ist, wird die Wiederholtaste von Hand gedrückt, wobei sich die vorgewählte Nummer automatisch wiederholt.

Die Nummer kann beliebig viele Male wiederholt werden.

Ertönte ein Besetztzeichen während der Nummernwahl, wird die Nummernwahl manuell durch Drücken der Schlußtaste unterbrochen. Falls die Nummernwahl erforderlich ist, wird ein Amtszeichen abgewartet, worauf die obengenannten Manipulationen wiederholt werden.

Die bekannte Einrichtung zum automatischen Teilnehmerruf mit derartigem Tastennummernschalter entlastet den Teilnehmer bei deren Benutzung im Teilnehmerapparat im Falle einer belegten Verbindungsleitung von der Notwendigkeit nicht, sich beim Teilnehmerapparat ständig zu befinden und mit der Tastatur bei einer mehrfachen widerholten Nummernwahl zu manipulieren.

Die einförmigen Manipulationen ermüden den Teilnehmer rasch, und er stellt die Versuche, mit dem besetzten Teilnehmer in Verbindung zu kommen, ein.

Der Erfindung liegt die Aufgabe zugrunde, eine Einrichtung zum automatischen Teilnehmerruf zu schaffen, in der durch eine automatische Analyse der Art von Ruf- oder Besetztzeichen des Wählamtes und durch eine anschließende automatische Nachbildung der Manipulation mit der Schluß- und der Wiederholtaste des Tastennummernschalters eine mehrfache auto matische Nummernwahl bei einer belegten Leitung und einer normierten Begrenzung der Anzahl dker automatischen wiederholten Nummernwahlen sowie der Teilnehmerruf durch einen speziellen Weckanruf beim Verbindungsaufbau gewährleistet sind, was einen Bedienkomfort bietet, indem ein eintöniges ermüdendes Manipulieren mit der Tastatur eliminiert, die Leitungsbelegungszeit in Vermeidung einer Überlastung bei ausreichender Störsicherheit während der Arbeit des Teilnehmerapparates automatisch begrenzt wird.

Dies wird dadurch erreicht, daß die Einrichtung zum automatischen Teilnehmerruf, die einen mit einem Sprechblock verbundenen Tastennummernschalter mit einem Arbeitsspeicher sowie einen Wecker enthält, gemäß der Erfindung einen Wandler von Tonsignalen des Wählamtes in nach der Amplitude normierte und nach der Dauer ausgewählte, anschließend zu zählende Impulse, dessen Eingang an die Leitung neben den entsprechenden Eingängen des Tastennummernschalters bzw. des Sprechblocks angeschlossen ist, einen ersten Dekodierzähler, dessen Zähleingang mit dem Ausgang des Wandlers von Tonsignalen des Wählamtes verbunden ist, einen zweiten Dekodierzähler, dessen Zähleingang an den Ausgang des genannten ersten Dekodierzählers gelegt und dessen Löscheingang über eine Löschschaltung mit dem Schlußzeichenausgang des Tastennummernschalters elektrisch verbunden ist, einen Imitator von Manipulationen mit den Tasten des Tastennummernschalters, dessen Eingang an den Ausgang des genannten ersten Dekodierzählers und dessen Ausgänge an die Steuereingänge von zu den Kontakten einer Wiederhol- bzw. einer Schlußtaste des Tastennummernschalters parallel liegenden Schaltern angeschlos sen sind, wobei an den letzteren der Schalter der Ausgang des genannten zweiten Dekodierzählers gelegt ist, einen Zeitgeber, der mit einem ersten an den Ausgang des genannten Wandlers von Tonsignalen des Wählamtes angeschlossenen Eingang, einem ersten an den Freigabeeingang des ersten Dekodierzählers gelegten Ausgang für ein während einer durch den Zeitgeber einprogrammierten Wartezeit erscheinendes Zählfreigabesignal für den ersten Dekodierzähler, einem zweiten an den Ausgang einer Steuersignalquelle für einen Sprechschalter des Tastennummernschalters angeschlossenen Startzeicheneingang, einem dritten an den Ausgang einer Steuersignalquelle für einen Impulsschalter des Tastennummernschalters angeschlossenen Unterbrechungszeicheneingang, einem zweiten und einem dritten Startzeichenausgang für einen Schallsignalformer versehen ist, enthält, wobei am zweiten Ausgang das Signal beim Ausbleiben irgendwelcher Signale in der Leitung für die gesamte Wartezeit und am dritten beim Auftreten von Rufzeichen des Wählamtes oder bei der Antwort des gewünschten Teilnehmers nach Beendigung der Zählzeit anliegt, der Schallsignalformer einen Wecker aufweist und in einer Schaltung ausgeführt ist, die für die Erzeugung eines Schallsignals beim Vorliegen von Rufzeichen des Wählamtes oder bei deren Ausbleiben im Laufe der gesamten Wartezeit sowie eines Signals sorgt, das von der Erreichung einer vorprogrammierten Endzahl von wiederholten automatischen Nummernwahlen zeugt, wobei der Schallsignalformer mit einem ersten mit dem Ausgang des zweiten Dekodierzählers verbundenen Eingang, einem zweiten und einem dritten Eingang, die an den zweiten bzw. dritten Ausgang des Zeitgebers geschaltet sind, und mit einem vierten Unterbrechungszeicheneingang versehen ist, der mit dem genannten Ausgang der Steuersignalquelle für einen Impulsschalter des Tastennummernschalters in Verbindung steht, der auch an den Löscheingang des ersten Dekodierzählers gelegt ist.

Damit sind eine automatische Analyse der Art der Signale des Wählamtes (Ruf- oder Besetztzeichen) und eine anschließende automatische Nachbildung der Manipulation der Schluß- und Wiederholtaste des Tastennummernschalters (ohne Eingriff des Teilnehmers) gewährleistet, was eine mehrfache automatische Nummernwahl bei einer belegten Leitung und einer normierten Begrenzung der Anzahl der automatischen wiederholten Nummernwahlen und einen Teilnehmerruf durch ein spezielles Schallsignal beim Verbindungsaufbau ermöglicht, was einen Bedienkomfort schafft, die Belegungszeit der Leitung in Vermeidung ihrer Überlastung automatisch beschränkt.

Hierbei ist es zweckmäßig, den Zeitgeber mit einer ersten und einer zweiten Zeitgeberschaltung, die über ein UND-Gatter verbunden sind, auszuführen, wo die erste Zeitgeberschaltung zur Vorgabe einer eventuellen Wartezeit für ein Eintreffen von Signalen des Wählamtes von der Leitung vorgesehen ist, deren erster Eingang als zweiter Eingang des Zeitgebers auftritt und deren Ausgang an den ersten Eingang des UND-Gatters angeschlossen ist und als zweiter Ausgang des Zeitgebers fungiert, während die zweite Zeitgeberschaltung, die beim Auftreten von Signalen in der Leitung für die Wartezeit betätigt wird, für die Vorgabe der Zählzeit des ersten Dekodierzählers bestimmt, deren erster Eingang mit dem an den zweiten Eingang der ersten Zeitgeberschaltung geführten Ausgang des UND-Gatters verbunden ist, deren zweiter Eingang samt dem zweiten Eingang der ersten Zeitgeberschaltung als dritter Eingang des Zeitgebers wirkt und deren Ausgang als erster und dritter Ausgang des Zeitgebers auftritt, als dessen erster Eingang der zweite Eingang des UND-Gatters dient.

Es ist auch zweckmäßig, den Imitator von Manipulationen mit den Tasten des Tastennummernschalters mit einer ersten Zeitgeberschaltung, deren Eingang als Eingang des Imitators wirkt, einer Verzögerungsschaltung, deren Eingang mit dem Ausgang der ersten Zeitgeberschaltung verbunden ist, der als neben dem Ausgang des zweiten Dekodierzählers an den Steuereingang des parallel zu den Kontakten der Schlußtaste des Tastennummernschalters gelegten Schalters angeschlossener Ausgang dient, und mit einer zweiten Zeitgeberschaltung auszuführen, deren Eingang mit dem Ausgang der Verzögerungsschaltung verbunden und deren Ausgang an den Steuereingang des parallel zu den Kontakten der Wiederholtaste des Tastennummerschalters gelegten Schalters geführt ist.

Es ist möglich, den Schallsignalformer mit einem ODER-Gatter, dessen zwei Eingänge als zweiter und dritter Eingang des Schallsignalformers auftreten, einem ersten Impulsgenerator, dessen einer Eingang mit dem Ausgang des ODER-Gatters verbunden ist, dessen anderer Eingang als vierter Unterbrechungszeicheneingang des Schallsignalformers-auftritt und dessen Ausgang an den Wecker angeschlossen ist, und mit einem zweiten Impulsgenerator auszuführen, dessen Eingang als erster Eingang des Schallsignalformers fungiert und dessen Ausgang auch an den Wecker angeschlossen ist.

Durchaus sinnvoll ist, den Wandler von Tonsignalen des Wählamtes in nach der Amplitude normierte und nach der Dauer ausgewählte, anschließend zu zählende Impulse in Form einer Reihenschaltung von einem Begrenzerverstärker, einem Wandler von Analogsignalimpulsen in Impulse entsprechender Dauer und einem Diskriminator von Impulsen nach deren Dauer, dessen Ausgang als Ausgang des Wandlers von Tonsignalen des Wählamtes fungiert, auszuführen.

Die erfindungsgemäße Einrichtung stellt bei einer ausreichenden Störfestigkeit eine Verbindung eines Teilnehmers bzw. Benutzers mit einem gewünschten Teilnehmer über ein Wählamt im automatischen Betrieb nach einer einmaligen manuellen Nummernwahl selbst bei einer für irgendeine Zeit belegten Verbindungsleitung sicher,ohne daß der Teilnehmer die Signale des Wählamtes abzuhören und weitere Manipulationen auf der Tastatur auszuführen braucht.

Der Hauptvorteil der erfindungsgemäßen Einrichtung ist es, eine automatische einprogrammierte Nachbildung eines manuellen Drückens (Eintastens) der Schluß- und der Wiederholtaste auf der Tastatur im Falle einer Verbindungsleitungsbelegung zu ermöglichen.

Die Benutzung des bestehenden in Serie gefertigten Nummernschalters und Gesprächsblocks eines Teilnehmerapparates vereinfacht die Realisierung der vorliegenden Erfindung beträchtlich, die ihrerseits eine zusätzliche Funktionsfähigkeit der Teilnehmerapparate gewährleistet.

Die Erfindung wird nachstehend durch die Beschreibung von konkreten Ausführungsbeispielen anhand der beiliegenden Zeichnungen weiter erläutert.
Es zeigt:

Fig. 1 ein Blockschaltbild einer erfindungsgemäßen Einrichtung zum automatischen Teilnehmerruf;

Fig. 2 ein Funktionsschaltbild eines Zeitgebers der erfindungsgemäßen Einrichtung zum Teilnehmerruf;

Fig. 3 ein Funktionsschaltbild eines Imitators von Manipulationen mit den Tasten eines Tastennummernschalters der erfindungsgemäßen Einrichtung;

Fig. 4 ein Schaltbild eines Schallsignalformers der erfindungsgemäßen Einrichtung;

Fig. 5 ein Funktionsschaltbild eines Wandlers von Tonsignalen des Wählamtes in nach der Amplitude normierte und nach der Dauer ausgewählte, anschließend zu zählende Impulse gemäß der Erfindung.

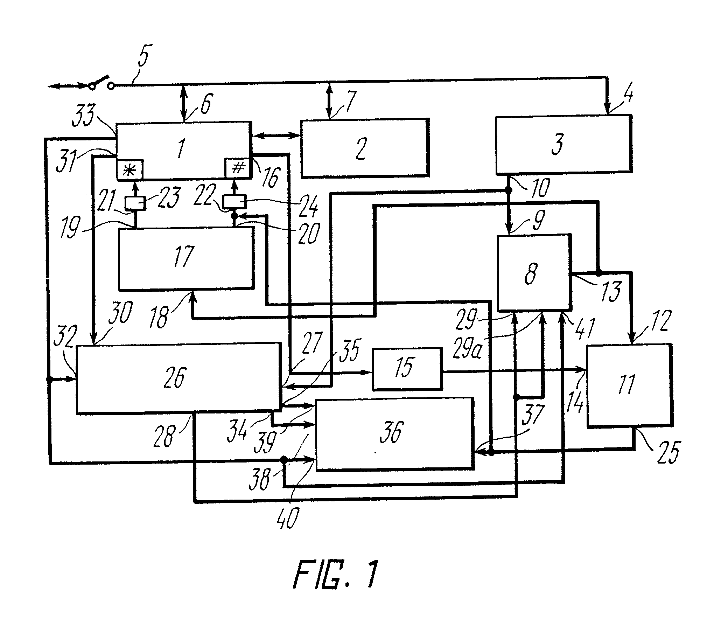

Die Einrichtung zum automatischen Teilnehmerruf (Fig. 1) enthält einen mit einem Sprechblock 2 verbundenen Tastennummernschalter 1 mit einem Arbeitsspeicher. Der Wandler 3 von Tonsignalen des Wählamtes in nach der Amplitude normierte und nach der Dauer ausgewählte, anschließend zu zählende Impulse ist mit seinem Eingang 4 an die Leitung 5 samt den Eingängen 6, 7 des Tastennummernschalters 1 bzw. des Sprechblocks 2 gelegt.

Ein erster Dekodierzähler 8 weist einen Zähleingang 9 auf, der mit dem Ausgang 10 des Wandlers 3 von Tonsignalen des Wählamtes verbunden ist.

Ein zweiter Dekodierzähler 11 weist einen Zähleingang 12 auf, der an den Ausgang 13 des genannten ersten Dekodierzählers 8 geschaltet ist.

Der Löscheingang 14 des Dekodierzählers 11 ist über eine Löschschaltung 15 mit dem Schlußzeichenausgang 16 des Tastennummernschalters 1 elektrisch verbunden.

Ein Imitator 17 von Manipulationen mit den Tasten des Tastennummernschalters 1 ist mit seinem Eingang 18 an den Ausgang 13 des genannten ersten Dekodierzählers 8 angeschlossen.

Die Ausgänge 19, 20 dieses Imitators 17 sind an die Steuereingänge 21, 22 von Schaltern 23, bzw. 24 geführt, die parallel zu den Kontakten einer Wiederhol- und einer Schlußtaste des Tastennummernschalters gelegt sind, wobei an den Eingang 22 auch der Ausgang 25 des genannten zweiten Dekodierzählers 11 angeschlossen ist.

Ein Zeitgeber 26 ist mit einem ersten an den Ausgang 10 des genannten Wandlers 3 von Tonsignalen des Wählamtes geschalteten Eingang 27 versehen. Der erste Zählfreigabeausgang 28 ist an den Freigabeeingang 29 des Dekodierzählers 8 angeschlossen. Der zweite Startzeicheneingang 30 ist an den Ausgang 31 einer Steuersignalquelle für einen Sprechschalter des Tastennummernschalters 1 gelegt. Der dritte Unterbrechungszeicheneingang 32 ist an den Ausgang 33 einer Steuersignalquelle für einen Impulsschalter des Tastennummernschalters 1 angeschlossen.

Der Zeitgeber 26 ist auch mit einem zweiten 34 und einem dritten Startzeichenausgang 35 für einen Schallsignalformer 36 versehen.

Der Schallsignalformer 36 ist in einer Schaltung aufgebaut, die die Erzeugung eines Schallsignals beim Vorliegen von Rufzeichen des Wählamtes oder bei deren Ausbleiben im Laufe der gesamten Wartezeit sowie eines Signals, das von der Erreichung einer vorprogrammierten Endzahl von wiederholten automatischen Nummernwahlen zeugt, gewährleistet.

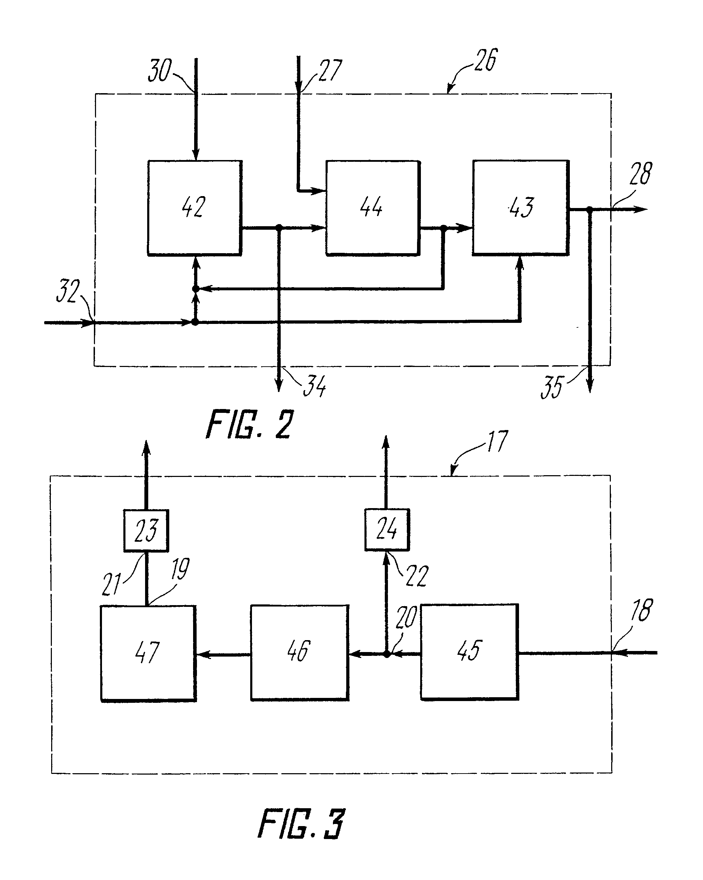

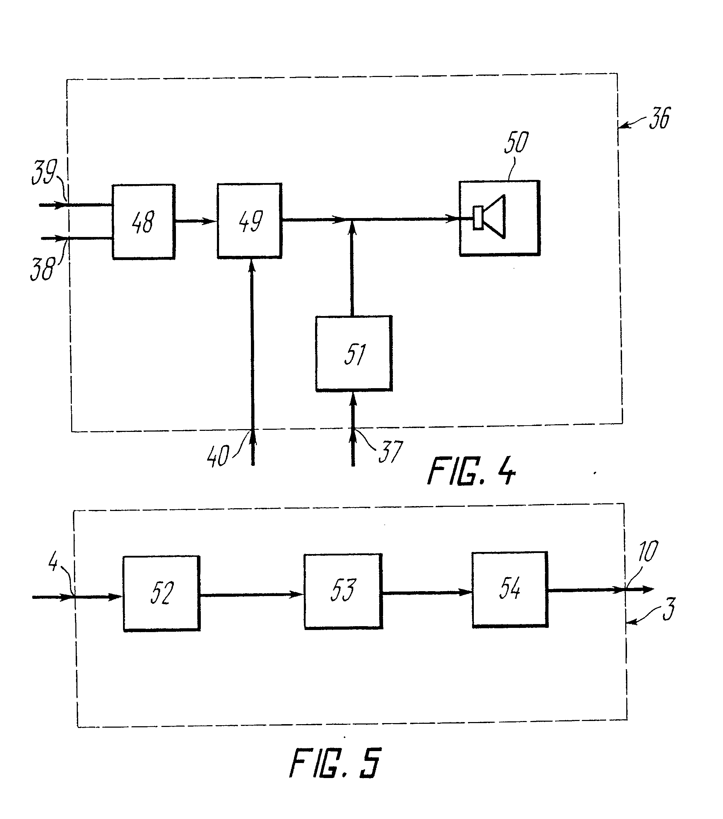

Hierbei ist der Schallsignalformer 36 mit einem ersten mit dem Ausgang 25 des zweiten Dekodierzählers 11 verbundenen Eingang 37, mit einem zweiten 38 und einem dritten Eingang 39, die an den zweiten 34 bzw. den dritten Ausgang 35 des Zeitgebers 26 gelegt sind, und mit einem vierten Unterbrechungszeicheneingang 40 versehen, der mit dem genannten Ausgang 33 der Steuersignalquelle für einen Impulsschalter des Tastennummernschalters 1 verbunden ist, der auch an den Löscheingang 41 des ersten Dekodierzählers 8 angeschaltet ist. Der Zeitgeber 26 (Fig. 2) enthält auch eine erste 42 und eine zweite Zeitgeberschaltung 43, die durch ein UND-Gatter 44 verbunden sind.

Die erste Zeitgeberschaltung 42 ist zur Vorgabe einer eventuellen Wartezeit für ein Eintreffen von Signalen des Wählamtes von der Leitung 5 (Fig. 1) vorgesehen, und deren erster Eingang (Fig. 2) tritt als zweiter Eingang 30 des Zeitgebers 26, während deren Ausgang an den ersten Eingang des UND-Gatters 44 gelegt ist und als zweiter Ausgang 34 des Zeitgebers 26 fungiert.

Die zweite im Falle der Erscheinung von Signalen auf der Leitung 5 (Fig. 1) während der Wartezeit betätigte Zeitgeberschaltung 43 ist zur Vorgabe der Zählzeit für den ersten Dekodierzähler 8 bestimmt. Deren erster Eingang (Fig. 2) ist mit dem Ausgang des UND-Gatters 44 verbunden, der an den zweiten Eingang der ersten Zeitgeberschaltung 42 angeschlossen ist. Der zweite Eingang der Zeitgeberschaltung 43 tritt samt dem zweiten Eingang der ersten Zeitgeberschaltung 42 als dritter Eingang 32 des Zeitgebers 26 und der Ausgang der zweiten Zeitgeberschaltung 43 als erster 28 und dritter Ausgang 35 des Zeitgebers 26 auf, als dessen erster Eingang 27 der zweite Eingang des UND-Gatters 44 dient.

Der Imitator 17 von Manipulationen mit den Tasten des Tastennummernschalters 1 (Fig. 3) enthält eine erste Zeitgeberschaltung 45, deren Eingang als Eingang 18 des Imitators 17 wirkt, eine Verzögerungsschaltung 46, deren Eingang mit dem Ausgang der ersten Zeitgeberschaltung 45 verbunden ist, der als Ausgang 20 (Fig. 1) fungiert, der neben dem Ausgang 25 des zweiten Dekodierzählers 11 an den Steuereingang 22 des Schalters 24 geführt ist, der parallel zu den Kontakten der Schlußtaste des Tastennummernschalters 1 gelegt ist, und eine zweite Zeitgeberschaltung 47 (Fig. 3), deren Eingang mit dem Ausgang der Verzögerungsschaltung 46 verbunden und deren Ausgang 19 an den Steuereingang 21 (Fig.1) des zu den Kontakten der Wiederholtaste des Tastennummernschalters 1 parallel liegenden Schalters 23 angeschlossen ist.

Der Schallsignalformer 36 (Fig. 4) enthält ein ODER-Gatter 48, dessen zwei Eingänge als zweiter 38 und dritter Eingang 39 des Schallsignalformers 36 fungieren, einen ersten Impulsgenerator 49,

dessen einer Eingang mit dem Ausgang des ODER-Gatters 48 verbunden ist, dessen anderer Eingang als vierter Unterbrechungseingang 40 des Schallsignalformers 36 auftritt und dessen Ausgang an einen Wecker 50 gelegt ist. Ein zweiter Impulsgenerator 51 weist einen Eingang, der als erster Eingang 37 des Schallsignalformers 36 wirkt, und einen Ausgang auf, der auch an einen Wecken 50 angeschlossen ist.

Der Wandler 3 von Tonsignalen des Wählamtes in nach der Amplitude normierte und nach der Dauer ausgewählte, anschließend zu zählende Impulse (Fig. 5) enthält eine Reihenschaltung aus einem Begrenzerverstärker 52, einem Wandler 53 von Analaogsignalimpulsen in Impulse entsprechender Dauer und einem Diskriminator 54 von Impulsen nach deren Dauer, dessen Ausgang als Ausgang 10 des Wandlers 3 von Tonsignalen des Wählamtes fungiert.

Der Vorteil der vorliegenden Erfindung sind also die Möglichkeit der Arbeit der Einrichtung in den Fällen, wo die Signale von Wählamt mit verschiedenen Verzögerungen nach Abschluß der Nummernwahl eintreffen, sowie die Einführung der Betriebsart einer automatischen Kontrolle von wiederholten automatischen Nummernwahlen.

Die Einrichtung zum automatischen Teilnehmerruf arbeitet wie folgt.

Beim Abheben des Handapparates wird der Nummernschalter 1 (Fig. 1) an die Verbindungsleitung 5 angeschlossen. Nachdem der Teilnehmer ein Dauersignal des Wählamtes, d.h. ein Amtszeichen, vernommen hat (worauf für den Teilnehmer die Notwendigkeit entfällt, zum Handapparat zu greifen, bis die Verbindung aufgebaut worden ist), wählt er die Nummer.

Der Startzeichenausgang 31 und der Unterbrechungszeichenausgang 33 des Nummernschalters 1 sind in der Weise geschaltet, daß hierbei an dem Startzeichenausgang 31, der an die Steuersignalquelle für den den Sprechweg für die Zeit der Nummernwahl überbrückenden Sprechschalter des Teilnehmerapparates angeschlossen ist, ein Signal mit einer der Zeit der Vermittlung der Nummer an die Leitung entsprechenden Dauer und an dem an die Steuersignalquelle für den Impulsschalter des Teilnehmerapparates angeschlossenen Unterbrechungszeichensausgang 33 den auf die Leitung übertragenen Nummernschalterimpulsen entsprechende Impulse auftreten.

Der Anschluß des Startzeichenausganges 31 und des Unterbrechungszeichenausganges 33 des Nummernschalters 1 an die Eingänge 30 bzw. 32 der ersten Zeitgeberschaltung 42 (Fig. 2) sichert deren Auslösung nach Abklingen des Signals am Startzeichenausgang 31 (Fig. 1) (Steuerung mit der Hinterflanke des Impulses ) und eine erzwungene Unterbrechung des durch die Zeitgeberschaltung 42 (Fig.2) erzeugten Impulses beim Aufteten eines Signals am Unterbrechungzeichenausgang 33 (Fig. 1) (Steuerung mit der Vorderflanke des Impulses ), was beim Kontaktschließen bei einer beliebigen der Tasten des Nummernschalters 1 automatisch erfolgt.

Außerdem unterbricht das Unterbrechdungssignal auch die Erzeugung eines Impulses durch die zweite Zeitgeberschaltung 43 (Fig. 2).

Die Vorbestimmung der ersten Schaltung 42 ist die Vorgabe einer Wartezeit durch die Wählamtsignaleinrichtung, die in Grenzen von 15 bis 20 s gewählt wird.

Nach erfolgter Nummernwahl erscheint also am Ausgang der ersten Zeitgeberschaltung 42 ein Impuls. Dieser Impuls kommt an einem der Eingänge des UND-Gatters 44 an, das beim Eintreffen eines Signals , d.h. des nach der Nummernwahl ersten Signals vom Wähleramt, an dessen anderem Eingang vom Ausgang 10 des Diskriminators 54 von Impulsen nach deren Dauer (Fig. 5) (falls das recht lange andauernde Signal am Ausgang der Zeitgeberschaltung 42 noch nicht aufgehört hat) ausgelöst wird.

Das Ausgangssignal des UND-Gatters 44 kommt am Unterbrechungszeicheneingang der ersten Schaltung 42, wodurch der erzeugte Impuls zwangsweise unterbrochen wird, und am Eingang der zweiten Schaltung 43 an, wodurch sie ausgelöst wird.

Der durch die Zeitgeberschaltung 43 erzeugte Impuls wirkt mit dessen ansteigender Flanke auf den Dekodierzähler 8 (Fig. 1) über dessen Stelleingang 29 ein, wodurch der Dekodierzähler 8 in den Ausgangszustand versetzt wird. Der eigentliche Dekodierzähler 8 arbeitet folgenderweise. Die auf den Zähleingang 9 des letzteren (beim Vorliegen eines Signals an dessen Steuereingang 29[a]) gegebenen Impulse lassen an dessen Ausgang ein Signal erscheinen, nachdem eine vorgegebene Zahl davon (beispielsweise 4 bis 5) eingetroffen sind. Ein Ausbleiben des Signals am Steuereingang 29[a] des Dekodierzählers 8 schließt die oben beschriebenen Tätigkeiten aus.

Nach erfolgter Nummernwahl können auf der Leitung 5 zwei Arten von Tonsignalen des Wählamtes auftreten: häufige - Besetztzeichen und seltene - Rufzeichen. Diese Signale gelangen auf den Begrenzerverstärker 52 (Fig. 5), wo sie vorverstärkt und nach der Amplitude normiert und dann in Impulse entsprechender Dauer durch den Wandler 53 umgeformt werden. Der Impulsdiskriminator 54 dient zur Verhinderung des Durchganges von Impulsen in den Dekodierzähler 8 (Fig. 1), die durch Störungen in der Leitung, darunter auch durch Nummernschalterimpulse, d.h. Impulse mit einer geringeren Dauer als die. Dauer der Tonsignale des Wählamtes - Besetztzeichen, verursacht sind.

Die Impulse vom Ausgang des Diskriminators 54 (Fig. 5) schalten, indem sie auf den Zähleingang 9 des Dekodierzählers 8 (Fig. 1) einwirken, ihn aufeinanderfolgend um, weil gleichzeitig an dessen Steuereingang 29 ein Signal vom Ausgang 28 der zweiten Zeitgeberschaltung 43 (Fig. 2) wirksam wird, die beim Eintreffen des nach der Nummernwahl ersten Signals vom Wähleramt betätigt wird.

Die Impulsdauer der zweiten Zeitgeberschaltung 43 wird in der Weise gewählt, daß sie die gesamte Folgeperiode von n Besetztzeichen des Wählamtes überschreitet, wobei sie wesentlich kleiner als die gesamte Folgeperiode von n Rufzeichen des Wählamtes bleibt.

Für die Wirkzeit des Signals am Steuereingang 29 des Dekodierzählers 8 erscheint also an dessen Ausgang ein Signal, nachdem das n-te Besetztzeichen vom Wählamt eingetroffen ist. Derartiges Signal tritt aber beim Vorhandensein von Rufzeichen des Wählamtes in der Leitung nicht auf. Auf dem genannten Sachverhalten baut eben die Wirkung der Einrichtung auf.

Im folgenden wird die Arbeitsweise der Einrichtung in Abhängigkeit von der Art der Signale des Wählamtes verschieden sein.

Beim Vorliegen der Besetztzeichen gelangt das am Ausgang 13 des Dekodierzählers 8 erschienene Signal auf den Eingang 18 (Fig. 3) der Zeitgeberschaltung 45, wobei es sie auslöst (Steuerung mit der Vorderflanke des Impulses). Der Impuls vom Ausgang der Zeitgeberschaltung 45 schließt, indem er auf den Steuereingang 22 des ersten schließenden Schalters 24 einwirkt, diesen Schalter 24, wobei er eine manuelle Betätigung der Schlußtaste des Nummernschalters 1 nachbildet. Es erfolgt eine Öffnung der Schleife mit deren nachfolgender Schließung nach Abklingen des durch die Zeitgeberschaltung 45 (Fig. 3) erzeugten Impulses. Die Dauer dieses Impulses wird unter der Bedingung einer sicheren Abarbeitung eines Schlußbefehls gewählt und beträgt ca. 0,3 bis 0,4 s.

Hierbei erscheint am Unterbrechungszeichenausgang 33 des Nummernschalters 1 ein Signal, das die Erzeugung eines Impulses durch die zweite Zeitgeberschaltung 43 abreißen läßt, was seinerseits durch Aufnebung des Signals vom Steuereingang 29 (Fig.1)des Dekodierzählers 8 diesen stoppt.

Der Anschluß des Ausganges der Zeitgeberschaltung 45 (Fig. 3) auch an den Eingang der durch die Hinterflanke des Impulses der Zeitgeberschaltung 45 auszulösenden Verzögerungsschaltung 46 sichert die Einstellung einer erforderlichen Verzögerung zwischen der Nachbildung der manuellen Betätigung (Fig. 1) der Schluß- und der Wiederholtaste des Nummernschalters 1.Die Dauer des durch die Verzögerungsschaltung 46 (Fig. 3) erzeugten Impulses wird in Grenzen von ca. 0,2 bis 0,3 s gewählt. Der durch die Verzögerungsschaltung 46 erzeugte Impuls löst mit seiner Hinterflanke die Zeitgeberschaltung 47 aus, deren Impuls vom Ausgang 19, indem er auf den Steuereingang 21 des zweiten schließenden Schalters 23 einwirkt, diesen Schalter 24 schließt, wodurch eine manuelle Betätigung der Wiederholtaste des Nummernschalters 1 nachgebildet wird.

Die Dauer des durch die Zeitgeberschaltung 47 (Fig.3) erzeugten Impulses wird unter der Bedingung einer sicheren Abarbeitung eines Wiederholungsbefehls gewählt und beträgt ca. 0,05 bis 0,1 s. Nach der Imitation des Drückens der Wiederholtaste wird die Nummer durch den Nummernschalter 1 erneut automatisch gewählt und in die Leitung geschickt.

Ist die Verbindungsleitung belegt, arbeitet die Einrichtung, wie oben beschrieben, bis die Leitung des gewünschten Teilnehmers frei geworden oder eine bestimmte Anzahl der widerholten Nummernwahlen erreicht worden ist.

Wird die Leitung frei, bewirken die umgewandelten Rufzeichen des Wählamtes kein Erscheinen eines Signals am Ausgang 13 des Dekodierzählers 8 (durch Unterbrechung des Wirksamwerdens des Signals am Freigabe/Steuereingang des Dekodierzählers 8).

Das Ausbleiben des Signals am Ausgang 13 des Dekodierzählers 8 schließt die Möglichkeit einer Nachbildung der manuellen Betätigung der Schluß- und der Wiederholtaste des Nummernschalters 1 aus, d.h. die hergestellte Verbindung wird nicht unterbrochen.

Hierbei wird nach Abklingen des durch die Zeitgeberschaltung 43 (Fig. 2) am Ausgang 35 erzeugten Impulses durch dessen Hinterflanke der Impulsgenerator 49 über das UND-Gatter 18 (Fig. 4) gestartet.

Der Impulsgenerator 49 wird beim Fehlen des Signals an dessen Sperreingang 40 ausgelöst (als Sperrsignal dient ein Unterbrechungssignal vom entsprechenden Ausgang 33 (Fig. 1) des Nummernschalters 1, was die Auslösung des Generators 49 durch die Hinterflanke eines auf einen Unterbrechungsbefehl unterbrochenen Impulses der Zeitgeberschaltung 43 verhindert. Das durch den Impulsgenerator 49 erzeugte Schallsignal wird auf den Wecker 50 gegeben, wodurch der Teilnehmer über den Verbindungsaufbau benachrichtigt wird. Ein ähnliches Signal wird auch im Notfall auf der Verbindungsleitung, d.h. beim Ausbleiben vom Signalen des Wählamtes nach Beendigung der Nummernwahl im Laufe der gesamten Zeit der Impulserzeugung durch die Zeitgeberschaltung 42, abgegeben. Hierbei wird der Impulsgenerator 49 durch die Hinterflanke des Impulses der Zeitgeberschaltung 42 über das UND-Gatter 48 aufgelöst (im Falle einer erzwungenen Unterbrechung der Impulserzeugung durch die Zeitgeberschaltung 42 - s. oben - liegt keine Auslösung des Impuls generators 49 vor).

Tritt ein Signal am Ausgang 13 (Fig. 1) des Dekodierzählers 8 (d.h. im Falle einer Wiederholung der automatischen Nummernwahl) auf, schaltet es, indem es am Zähleingang des Dekodierzählers 11 eintrifft, diesen aufeinanderfolgend um, bis ein Signal am Ausgang des Zählers 11 erschienen ist. In diesem Fall sorgt das Signal vom Ausgang des Zählers 11, indem es am Steuereingang 22 des schließenden Schalters 24 (Schluß) ankommt, für dessen Schließen. Hierbei werden die Schleife geöffnet und der Zyklus der wiederholten automatischen Nummernwahlen unterbrochen. Gleichzeitig sichert die Herstellung der Verbindung des Ausganges des Zählers 11 über den zweiten Impulsgenerator 51 mit dem Wecker 50 eine Einschaltung des letzteren und die Erzeugung eines speziellen Schallsignals durch diesen, welches von einem durch den ersten Impulsgenerator 49 erzeugten Signal verschieden ist. Das Ertönen des Signals unterbrechen (und den Zähler 11 in den Ausgangszustand bringen) kann der Teilnehmer entweder durch Auflegen des Handapparates auf den Gabelumschalter des Teilnehmerapparates oder durch manuelles recht dauerhaftes Drücken der Schlußtaste des Nummernschalters 1. Die genannte Bedingung wird durch Einführung (zwischen dem Schlußzeichenausgang 16 des Nummernschalters 1 und dem Einstelleingang des Zählers 11) der Löschschaltung 15 in den Schaltkreis gewährleistet, die nur relativ dauerhafte Signale (von ca. 2 s und mehr) durchläßt. In einem beliebigen Fall muß die Mindestdauer des durch die Löschschaltung 15 (den Diskriminator nach der Dauer) durchgelassenen Signals die Höchstdauer des durch die Zeitgeberschaltung 45 (Fig. 3) erzeugten Impulses überschreiten (sonst wird der Zähler 11 (Fig. 1) nach jedem Befehl für eine automa tische wiederholte Nummernwahl vom Dekodierzähler 8 (Fig. 1), der eine Auslösung der Zeitgeberschaltung 45 (Fig. 3) und als Folge dessen das Erscheinen eines Signals am Schlußzeichenausgang des Nummernschalters 1 (Fig. 1) für deren Betriebszeit bewirkt, in den Ausgangkszustand gebracht, es wird also kein eigentliches Zählen stattfinden). Die Zahl der Zustände des Zählers 11 (d.h. die zulässige Zahl der wiederholten Nummernwahlen im automatischen Betrieb) wird in Grenzen von 5 bis 10 ausgehend von den durch die Disponenten der Verbindungsleitungen auferlegten Beschränkungen gewählt.

Die Realisierung der eingeführten Einheiten ist auf Basis einer bestehenden KMOS-Technologie möglich. Es ist ein arbeitendes Modell der Einrichtung in Form eines von der Leitung gespeisten Mikroschaltkreises hergestellt.

Die vorliegende Erfindung erhöht also im beträchtlichen Maße die Wirksamkeit der Arbeit des Grundgeräts, wodurch gleichzeitig ein optimaler Betrieb des Teilnehmerapparates in der Leitung sichergestellt wird, was zu einer Erweiterung von Gebrauchseigenschaften des Teilnehmerapparates und zu einer Zeiteinsparung für die Teilnehmer beiträgt.

Industrielle Anwendbarkeit

Die Erfindung kann in Teilnehmerapparaten mit einem Impuls- und Frequenzverfahren der Übertragung einer gewählten Nummer angewendet werden-

## Ansprüche

1. Einrichtung zum automatischen Teilnehmerruf, die einen mit einem Sprechblock (2) verbundenen Tastennummernschalter (1) mit einem Arbeitsspeicher sowie einen Wecker (50) enthält, **dadurch gekennzeichnet,** daß sie einen Wandler (3) von Tonsignalen des Wählamtes in nach der Amplitude normierte und nach der Dauer ausgewählte, anschließend zu zählende Impulse, dessen Eingang (4) an die Leitung (5) neben den entsprechenden Eingängen (6, 7) des Tastennummernschalters (1) bzw. des Sprechblocks (2) angeschlossen ist,

   einen ersten Dekodierzähler (8), dessen Zähleingang (9) mit dem Ausgang (10) des Wandlers (3 ) von Tonsignalen des Wählamtes verbunden ist.

   einen zweiten Dekodierzähler (11), dessen Zähleingang (12) an den Ausgang (13) des genannten ersten Dekodierzählers (8) gelegt ist und dessen Löscheingang (14) über eine Löschschaltung (15) mit dem Schlußzeichenausgang (15) des Tastennummernschalters (1) elektrisch verbunden ist,

   einen Imitator (1) von Manipulationen mit den Tasten des Tastennummernschalters (1), dessen Eingang (18) an den Ausgang (13) des genannten ersten Dekodierzählers (8) und dessen Ausgänge (21, 22) an die Steuereingänge (21, 22) von zu den Kontakten einer Wiederhol- und einer Schlußtaste des Tastennummernschalters (1) parallel liegenden Schaltern (23 bzw. 24) angeschlossen sind, wobei an den Eingang (22) auch der Ausgang (25) des genannten zweiten Dekodierzählers (11) gelegt ist,

   einen Zeitgeber (26), der mit einem ersten an den Ausgang (10) des genannten Wandlers (3) von Tonsignalen des Wählamtes angeschlossenen Eingang (27), einem ersten an den Freigabeeingang (29) des ersten Dekodierzählers (8) gelegten Ausgang (28) für ein während einer durch den Zeitgeber (26) einprogrammierten Wartezeit erscheinendes Zählfreigabesignal für den ersten Dekodierzähler (8) , einem zweiten an den Ausgang (31) einer Steuersignalquelle für einen Sprechschalter des Tastennummernschalters (1) angeschlossenen Startzeicheneingang (30), einem dritten an den Ausgang (33) einer Steuersignalquelle für einen Impulsschalter des Tastennummernschalters (1) angeschlossenen Unterbrechungszeicheneingang (32),

einem zweiten (34) bzw. einem dritten Startzeichenausgang (35) eines Schallsignalformers (36) versehen ist, enthält, wobei

der Schallsignalformer (36) einen Wecker (50) aufweist und in einer Schaltung ausgeführt ist, die für die Erzeugung eines Schallsignals beim Vorliegen von Rufzeichen des Wählamtes oder bei deren Ausbleiben im Laufe der gesamten Wartezeit sowie eines Signals sorgt, das von der Erreichung einer vorpogrammierten Endzahl von wiederholten automatischen Nummernwahlen zeugt, wobei der Schallsignalformer (36) mit einem ersten mit dem Ausgang (25) des zweiten Dekodierzählers (11) verbundenen Eingang (37), einem zweiten (38) und einem dritten Eingang (39), die an den zweiten (34) bzw. dritten Ausgang (35) des Zeitgebers (26) geschaltet sind, und mit einem vierten Unterbrechungszeicheneingang (40) versehen ist, der mit dem genannten Ausgang (33) der Steuersignalquelle für einen Impulsschalter des Tastennummernschalters (1) in Verbindung steht, der auch an den Löscheingang (41) des ersten Dekodierzählers (8) gelegt ist.

2. Einrichtung nach Anspruch 1, **dadurch gekennzeichnet,** daß der Zeitgeber (26) eine erste ( 42) und eine zweite Zeitgeberschaltung (43), die über ein UND-Gatter (44) verbunden sind, enthält, wobei die erste Zeitgeberschaltung (42) zur Vorgabe einer eventuellen Wartezeit für ein Eintreffen von Signalen des Wählamtes von der Leitung (5) vorgesehen ist, deren erster Eingang als zweiter Eingang (30) des Zeitgebers (26) auftritt und deren Ausgang. an den ersten Eingang des UND-Gatters (44) angeschlossen ist und als zweiter Ausgang (34) des Zeitgebers (26) fungiert, während die zweite Zeitgeberschaltung (43), die beim Auftreten von Signalen in der Leitung (5) für die Wartezeit betätigt wird, für die Vorgabe der Zählzeit des ersten Dekodierzählers (8) bestimmt, deren erster Eingang mit dem an den zweiten Eingang der ersten Zeitgeberschaltung (42) geführten Ausgang des UND-Gatters (44) verbunden ist, deren zweiter Eingang samt dem zweiten Eingang der ersten Zeitgeberschaltung (42) als dritter Eingang (32) des Zeitgebers (26) wirkt und deren Ausgang als erster (28) und dritter Ausgang (35) des Zeitgebers (26) auftritt, als dessen erster Eingang (27) der zweite Eingang des UND-Gatters (44) dient.

3. Einrichtung nach den Anspruchen 1 und 2, **dadurch gekennzeichnet,** daß der Imitator (17) von Manipulationen mit den Tasten des Tastennummernschalters eine erste Zeitgeberschaltung (45), deren Eingang als Eingang (18 ) des Imitators (17) wirkt, eine Verzögerungsschaltung (46), deren Eingang mit dem Ausgang der ersten Zeitgeberschaltung (45) verbunden ist, der als neben dem Ausgang (25) des zweiten Dekodierzählers (11) an den Steuereingang (22) des parallel zu den Kon takten der Schlußtaste des Tastennummernschalters (1) gelegten Schalters (24) angeschlossener Ausgang (20) dient, und eine zweite Zeitgeberschaltung (47) enthält, deren Eingang mit dem Ausgang der Verzögerungsschaltung (46) verbunden und deren Ausgang (19) an den Steuereingang (21) des parallel zu den Kontakten der Wiederholtaste des Tastennummernschalters (1) gelegten Schalters (23) geführt ist.

4. Einrichtung nach den Ansprüchen 1, 2, 3, **dadurch gekennzeichnet,** daß der Schallsignalformer (36) ein ODER-Gatter (48), dessen zwei Eingänge als zweiter (38) und dritter Eingang (39) des Schallsignalformers (36) auftreten, einen ersten Impulsgenerator (49), dessen einer Eingang mit dem Ausgang des ODER-Gatters (48) verbunden ist, dessen anderer Eingang als vierter Unterbrechungszeichenausgang (40) des Schallsignalformers (36) auftritt und dessen Ausgang an den Wecker (50) angeschlossen ist, und einen zweiten Impulsgenerator (51) enthält, dessen Eingang als erster Eingang (37) des Schallsignalformers (36) fungiert und dessen Ausgang auch an den Wecker (50) angeschlossen ist.

5. Einrichtung nach den Ansprüchen 1, 2, 3, 4 **dadurch gekennzeichnet,** daß der Wandler (3) von Tonsignalen des Wählamtes in nach der Amplitude normierte und nach der Dauer ausgewählte, anschließend zu zählende Impulse eine Reihenschaltung von einem Begrenzerverstärker (52), einem Wandler (53) von Analogsignalimpulsen in Impulse entsprechender Dauer und einem Diskriminator (54) von Impulsen nach deren Dauer, dessen Ausgang als Ausgang (10) des Wandlers (3) von Signalen des Wählamtes fungiert, aufweist.

FIG. 1

FIG. 2

FIG.3

FIG. 4

FIG. 5